# EUROPÄISCHE PATENTSCHRIFT

(11) **EP 3 260 402 B1**
(45) Veröffentlichungstag und Bekanntmachung des Hinweises auf die Patenterteilung: **07.08.2019**
(21) Anmeldenummer: 17171278.9
(22) Anmeldetag: 16.05.2017
(51) Int. Cl.: B65G 57/30

(54) **KISTENSTAPELSYSTEM**
CRATE STACKING SYSTEM
SYSTÈME EMPILEUR DE CAISSES

(30) Priorität: 17.05.2016 DE 102016109017
(43) Veröffentlichungstag der Anmeldung: 27.12.2017
(73) Patentinhaber: Wincor Nixdorf International GmbH, 33106 Paderborn (DE)
(72) Erfinder: SCHRÖDER, Berthold, 98693 Ilmenau (DE)

(56) Entgegenhaltungen:
- WO-A2-2014/067530
- DE-A1-102006 038 089
- GB-A- 823 300
- JP-A- H10 338 351
- JP-U- H0 397 431
- NL-A- 290 905
- US-A- 3 866 763

## Beschreibung

Die Erfindung betrifft ein Kistenstapelsystem zum automatischen Stapeln von Kisten.

Kisten, z.B. Getränkekisten, werden zum Transport von vollen und leeren Getränkebehältern, wie beispielsweise Flaschen, verwendet. Ein typischer Transportpfad einer Leergutkiste ist beispielsweise wie folgt: ein Verbraucher gibt die Kiste bei einem Getränkemarkt zurück, im Getränkemarkt werden verschiedene Kistentypen gesammelt und gemeinsam zu einer Leergutverwertungsstelle zurücktransportiert. Für den gemeinsamen Rücktransport der Kisten werden diese häufig übereinandergestapelt und auf Transportpaletten transportiert. Jedoch gibt es eine große Anzahl an verschiedenen Kisten (in etwa 2000 Typen) mit verschiedenen Geometrien, sodass nicht alle Kistentypen miteinander stapelbar sind. Bisher wird das Stapeln der Kisten manuell, d.h. von Personen, ausgeführt, oder es werden für einzelne Kistentypen zugehörige Stapelvorrichtungen verwendet, welche gewöhnlich nur einen einzigen Kistentyp stapeln. Jedoch ist das manuelle Stapeln anstrengend und zeitaufwendig und ist das automatische Stapeln pro Stapelvorrichtung auf einen Kistentyp beschränkt.

Beispielsweise aus der WO 2014/067530 A2 ist entsprechend dem Oberbegriff des Anspruchs 1 ein Behälterstapelsystem mit einer Behälterstapelvorrichtung zum automatischen Stapeln von Behältern bekannt, aufweisend eine Behälter-Fördervorrichtung mit einem Behälter-Zuführ-, einem Behälter-Stapel- und einem Behälter-Abführabschnitt, eine Behälter-Hubvorrichtung, welche am Behälter-Stapelabschnitt angeordnet ist, und eine Steuervorrichtung.

Es wird ein Kistenstapelsystem zum automatischen Stapeln von Kisten, optional Getränkekisten, geschaffen, welches automatisch eine Vielzahl unterschiedlicher Kisten stapeln kann.

Es wird ein Kistenstapelsystem gemäß Anspruch 1 bereitgestellt. Weitere Ausführungsformen des Kistenstapelsystems sind in den abhängigen Ansprüchen beschrieben.

Der hier verwendete Begriff "Kiste" kann beispielsweise Getränkekisten betreffen, in welchen z.B. volle oder leere Getränkebehälter, beispielsweise Dosen und/oder Flaschen, aufnehmbar sind. Darüber hinaus kann der Begriff "Kiste(n)" jegliche Art von Transporthilfsmittel betreffen, z.B. Kisten aus der Nahrungsmittelindustrie (bspw. E1-, E2-, E3-Kisten), Gitterboxen, Trays, Tablare, Kanister, Fässer, etc.

Ein Kistenstapelsystem gemäß einer beispielhaften Ausführungsform kann eine Mehrzahl von Kisten (z.B. Leergutkisten) und eine Kistenstapelvorrichtung aufweisen.

Eine Kiste kann z.B. einen zumindest im Wesentlichen rechteckigen Grundriss mit einer Längsrichtung und einer Quer-/Breitenrichtung haben und sich senkrecht (z.B. in einer Kistenstapelrichtung) zu diesem Grundriss erstrecken. Eine solche Kiste kann beispielsweise in etwa von 15 cm bis 45 cm breit, in etwa von 20 cm bis 45 cm lang und in etwa von 15 cm bis 40 cm hoch sein. Optional kann die Kiste 30 cm breit, 40 cm lang und 30 cm hoch sein. Die Kiste hat eine obere Einsetzöffnung zum Einsetzen von Artikeln (z.B. Leergut). Der oberen Einsetzöffnung liegt ein Boden mit einer Unterseite gegenüber. An der Unterseite kann die Kiste an zumindest zwei gegenüberliegenden Seiten (z.B. den Längsseiten, z.B. auch allen Seiten) mit einem jeweiligen z.B. langgestreckten Vorsprung (z.B. einem Auflagevorsprung oder einer Auflagekante) versehen sein, der sich von der Unterseite aus nach unten sowie in einem seitlichen Abstand zu einem jeweils zugehörigen Außenlängsrand des Bodens erstreckt. An den z.B. zwei einander gegenüberliegenden Seiten der Kiste kann somit z.B. eine seitlich nach außen offene Eingriffs-Längsaussparung vorliegen, die von der Unterseite des Bodens und dem langgestreckten Vorsprung begrenzt wird. Beispielsweise kann die Eingriffs-Längsaussparung auch an allen Seiten der Kiste vorliegen. Das heißt, die Eingriffs-Längsaussparung hat z.B. einen rechteckigen Querschnitt (Höhe x Tiefe) von in etwa 0,5 cm bis 1,5 cm auf in etwa 1 cm bis 3 cm, optional von etwa 1 cm auf 2 cm. Der rechteckige Querschnitt erstreckt sich entlang des Außenlängsrands, wobei die Höhe eine Eingriffshöhe und die Tiefe eine Eingriffstiefe definiert. Eine solche Kiste ist in der Kistenstapelrichtung (z.B. einer Vertikalrichtung, d.h., Schwerkraftrichtung) auf eine andere Kiste stapelbar. Hierzu kann der langgestreckte Vorsprung der oberen Kiste z.B. in die Einsetzöffnung einer unteren Kiste eingreifen, wodurch eine zumindest im Wesentlichen formschlüssige Verbindung der beiden Kisten geschaffen wird.

Die Kistenstapelvorrichtung kann aufweisen: eine Kisten-Fördervorrichtung, eine Kisten-Hubvorrichtung und eine Steuervorrichtung.

Die Kisten-Fördervorrichtung kann mit einer Förderbahn (z.B. einem Förderband oder mehreren parallelen Förder- oder Kettenbändern, einem Rollenförderer, etc.) bereitgestellt sein, welche eine Förderfläche definiert. Auf der Förderfläche sind die Kisten in einer Förderrichtung (oder entgegen dieser, bspw. bei wechselnder Förderrichtung) transportierbar. Die Förderfläche kann einen Kisten-Zuführabschnitt, auf welchen die Kisten zuführbar sind, einen Kisten-Stapelabschnitt, in welchem die Kisten stapelbar sind, und einen Kisten-Abführabschnitt, von welchem die gestapelten Kisten abführbar sind, aufweisen. Die Kisten-Fördervorrichtung kann eingerichtet sein, um die (z.B. einzelnen) Kisten von dem Kisten-Zuführabschnitt zum Kisten-Stapelabschnitt zu fördern und um die gestapelten Kisten vom Kisten-Stapelabschnitt zum Kisten-Abführabschnitt zu fördern. Beispielsweise können die einzelnen, oben beschrieben Abschnitte in dieser Reihenfolge angeordnet sein. Auch kann der Kisten-Zuführabschnitt zugleich der Kisten-Abführabschnitt sein.

Die Kisten-Hubvorrichtung kann am Kisten-Stapelabschnitt angeordnet sein und kann auf gegenüberliegenden Seiten der Förderbahn Greifelemente aufweisen. Zum Beispiel kann die Kisten-Hubvorrichtung symmetrisch an beiden Seiten der Förderbahn angeordnet sein oder kann auch nur an einer Seite angeordnet sein. Beispielsweise sind auf jeder Förderbahnseite zwei Greifelemente angeordnet; jedoch ist auch eine Anordnung mit nur einem z.B. in der Förderrichtung langestreckten Greifelement pro Förderbahnseite möglich. Des Weiteren sind auch mehrere Greifelemente, bspw. drei, vier fünf oder mehr pro Seite, möglich.

Die Greifelemente sind z.B. in einer Greifrichtung zumindest im Wesentlichen parallel zur Förderfläche aufeinander zu und voneinander weg bewegbar (z.B. unabhängig voneinander oder synchron zueinander). Die Greifelemente sind z.B. einzeln oder gemeinsam bewegungsgekuppelt angetrieben, z.B. durch einen Elektromotor oder einen Pneumatik-Aktuator, oder die Greifelemente sind z.B. durch Federkraft in einer Bewegungsrichtung vorgespannt. Zudem sind die Greifelemente in der Kistenstapelrichtung zumindest im Wesentlichen senkrecht zur Förderrichtung synchron hoch und runter bewegbar, bspw. durch einen Elektromotor oder einen Pneumatik-Aktuator. Beispielsweise erfolgt diese Aufwärts-/Abwärts-Synchronbewegung durch ein mechanisches Kuppeln der Greifelemente an beiden Seiten der Förderbahn.

Weiter kann jedes Greifelement ein freies Ende mit einem seitlich zur Förderbahn hin vorstehenden Greiffinger aufweisen, der in der Kistenstapelrichtung eine Eingriffsdicke hat, die zumindest im Wesentlichen gleich der oder kleiner ist als die Eingriffshöhe der Eingriffs-Längsaussparung. Die Eingriffsdicke kann der Eingriffshöhe z.B. direkt benachbart zum langgestreckten Vorsprung entsprechen. Die Eingriffsdicke ist z.B. gleich der oder kleiner als die Eingriffshöhe des Kistentyps mit der geringsten Eingriffshöhe. Die Kiste kann somit an einander gegenüberliegenden Seiten (z.B. den Längsseiten oder den dazu quer orientierten Stirnseiten) durch die Greiffinger greifbar sein, indem die Greiffinger an den einander gegenüberliegenden Seiten in die zugehörigen Eingriffs-Längsaussparungen eingreifen. Somit sind die verschiedenen Kistentypen mit einer Kisten-Stapelvorrichtung unabhängig von weiteren Geometriemerkmalen der Kiste (z.B. Höhe, etwaige Vorsprünge, Eingriffsöffnungen, usw.) stapelbar.

Die Steuervorrichtung kann mit der Kisten-Fördervorrichtung und der Kisten-Hubvorrichtung verbunden sein und kann einen Sensor (z.B. eine Kamera, einen Laserscanner, etc.) aufweisen, welcher einen Typ der Kiste und/oder eine Position der Kiste im Kisten-Stapelabschnitt erfasst. Die Steuervorrichtung kann weiter eingerichtet sein, um die Kisten-Fördervorrichtung und die Kisten-Hubvorrichtung in einer Weise aufeinander abgestimmt zu steuern, dass in wiederholter Weise ein Vorgang durchführbar ist, gemäß welchem:
- eine Kiste, die sich im Kisten-Stapelabschnitt auf der Förderfläche befindet, von den Greifelementen z.B. an beiden Längsseiten gegriffen und angehoben wird,
- eine neue Kiste in den Kisten-Stapelabschnitt unter die angehobene Kiste gefördert wird,
- die angehobene Kiste auf die neue Kiste abgesetzt wird und die gestapelten Kisten aus dem Kisten-Stapelabschnitt abtransportiert werden oder
- die neue Kiste wiederum von den Greifelementen ergriffen und zusammen mit der oder den darauf abgesetzten vorherigen Kisten angehoben wird,
- eine weitere Kiste in den Kisten- Stapelabschnitt gefördert wird, auf welche dann die angehobenen Kisten abgesetzt werden, und
- die gestapelten Kisten aus dem Kisten-Stapelabschnitt abtransportiert werden.

Auf diese Weise sind mehrere, z.B. zwei, drei, vier, fünf und mehr Kisten aufeinander stapelbar.

Jedes der Greifelemente weist erfindungsgemäß eine seitliche Anschlagschulter auf, die in einem Schulterabstand in der Bewegungsrichtung des Greifelements von einem freien Ende des zugehörigen Greiffingers ausgebildet ist. Beispielsweise kann die Anschlagschulter auch als ein Vorsprung ausgebildet sein, welcher an der Oberseite des Greifelements vorsteht. Der Schulterabstand ist erfindungsgemäß kleiner als die seitliche Eingriffstiefe der Eingriffs-Längsaussparung, sodass beim Eingriff des jeweiligen Greiffingers in die zugehörige Eingriffs-Längsaussparung die Anschlagschulter in Anschlagkontakt mit einer Seitenfläche (z.B. einer Längs- oder Stirnseitenfläche) der Kiste steht. Somit kann die Kiste sicher durch den Kontakt der Anschlagschulter mit der Seitenfläche der Kiste ergriffen werden und durch den Greiffinger, welcher sich mit der Unterseite des Bodens in Kontakt befindet, angehoben werden.

An jeder Seite der Förderbahn kann ein einzelnes Greifelement mit einem einzelnen Greiffinger bereitgestellt sein, welcher z.B. in Richtung der Förderbahn langgestreckt ausgebildet ist. Beispielsweise kann der Greiffinger eine langgestreckte L-Form aufweisen, wobei der horizontale Schenkel der L-Form den Boden der Kiste kontaktiert und der vertikale Schenkel der L-Form die Anschlagschulter ausbildet und die Seitenfläche der Kiste kontaktiert.

Die Bewegung der Greifelemente aufeinander zu und voneinander weg kann eine Schwenkbewegung um eine Achse sein, welche entweder zumindest im Wesentlichen senkrecht oder parallel zur Förderfläche ist. Außerdem kann diese Bewegung auch als eine Linearbewegung realisiert sein. Beispielsweise kann bei einer horizontalen Schwenkachse die Kiste an ihren Längsseiten ergriffen werden. Jedoch kann beispielsweise bei einer vertikalen Schwenkachse, mittels welcher die Greifelemente ausgehend von der Seite zu den Stirnseiten der Kiste geschwenkt werden, die Kiste an ihren Stirnseiten ergriffen werden.

Die Bewegung der Greifelemente aufeinander zu und voneinander weg kann von der Steuervorrichtung unabhängig steuerbar sein, beispielsweise um die Kiste mittels der Greiffinger im Kisten-Stapelabschnitt vor dem Anheben selektiv zu kontaktieren und auf der Förderfläche auszurichten. Jedoch ist es auch möglich, dass die Greifelemente z.B. mechanisch miteinander gekuppelt sind oder von der Steuervorrichtung gesteuert werden, um ihre Bewegungen synchron zueinander auszuführen.

Die Kisten-Hubvorrichtung kann an den gegenüberliegenden Seiten der Förderbahn ein einzelnes oder mehrere Zentrierelemente (z.B. Zentrierhebel oder Paneele) aufweisen. Die Zentrierelemente sind beispielsweise in einer Zentrierrichtung z.B. zumindest im Wesentlichen parallel zur Förderfläche aufeinander zu und voneinander weg bewegbar. Die Zentrierelemente sind z.B. einzeln oder gemeinsam angetrieben, z.B. durch einen Elektromotor oder einen Pneumatik-Aktuator. Jedes Zentrierelement kann einen oberen und einen unteren Zentrierabschnitt aufweisen, die jeweils seitlich zur Förderbahn hin orientiert sind. Die Zentrierabschnitte dienen, um zum Zentrieren der vorigen (z.B. angehobenen) Kiste/Kisten zu einer neuen Kiste (z.B. einer im Kisten-Stapelabschnitt stehende Kiste) eine jeweils zugehörige Seitenfläche der vorigen Kiste/Kisten und eine jeweils zugehörige Seitenfläche der neuen Kiste seitlich kontaktieren zu können. Somit kann ein sicheres Einsetzen des Vorsprungs der oberen Kiste in die Einsetzöffnung der unteren Kiste erfolgen.

Die Zentrierelemente können mit den Greifelementen mechanisch bewegungsgekuppelt sein, um die Bewegung der Zentrierelemente mit der Bewegung der Greifelemente mechanisch zu synchronisieren. Jedoch kann eine derartige Synchronbewegung auch durch ein entsprechendes Steuern der einzelnen Zentrierelemente durch die Steuervorrichtung erfolgen.

Der Kisten-Zuführabschnitt kann auch der Kisten-Abführabschnitt sein. Folglich können Einzelkisten und Kistenstapel über den gleichen Abschnitt in den Kisten-Stapelabschnitt hinein/heraus geführt werden. Der Kisten-Zuführabschnitt und der Kisten-Abführabschnitt können bezüglich der Kisten-Hubvorrichtung z.B. auch so angeordnet sein, dass die Kisten mittels des Kisten-Zuführabschnitts an einer Seite in die Kisten-Hubvorrichtung hinein gefördert werden, im Kisten-Stapelabschnitt gestapelt werden oder diesen ungestapelt durchlaufen und an der anderen Seite der Kisten-Hubvorrichtung mittels des Kisten-Abführabschnitts ausgegeben werden.

Die Förderbahn kann einen Förderbahn-Hauptabschnitt und mehrere Kisten-Stapelabschnitte aufweisen, die seitlich benachbart zu dem Förderbahn-Hauptabschnitt angeordnet sind. Hier ist z.B. der Kisten-Zuführabschnitt eines jeweiligen Kisten-Stapelabschnitts auch der Kisten-Abführabschnitt und kann mit dem Förderbahn-Hauptabschnitt überlappen. Die Förderbahn kann z.B. aus verschiedenartigen Förderbahnen, beispielsweise Rollenförderer, Förderbänder, Kettenbandförderer, etc. gebildet sein, welche zueinander verschiedene Winkel haben können. Die Kistenstapelvorrichtung kann mehrere Kisten-Hubvorrichtungen aufweisen, die den Kisten-Stapelabschnitten jeweilig zugeordnet sind.

Beispielsweise sind zwei Kisten-Stapelabschnitte auf einander gegenüberliegenden Seiten des Förderbahn-Hauptabschnitts angeordnet. Eine derartige Anordnung kann z.B. eine Grundfläche einnehmen, welche z.B. zumindest im Wesentlichen den Maßen einer Europalette (1200 x 800 mm) entspricht. Darüber hinaus kann die Grundfläche auch z.B. zumindest im Wesentlichen 1400 x 800 mm sein.

Ausführungsbeispiele der Erfindung sind in den Figuren dargestellt und werden im Folgenden näher erläutert.

Es zeigen:
- Figur 1: eine perspektivische, schematische Ansicht eines Kistenstapelsystems gemäß einer beispielhaften Ausführungsform;
- Figur 2: eine schematische Schnittansicht einer stapelbaren Kiste, welche beispielsweise von dem in der Figur 1 gezeigten Kistenstapelsystem gestapelt wird;
- Figur 3A: eine schematische Vorderansicht des in der Figur 1 gezeigten Kistenstapelsystems mit Greifelementen in einer Eingriffsposition vor dem Anheben einer Kiste;
- Figur 3B: eine schematische Vorderansicht des in der Figur 1 gezeigten Kistenstapelsystems in einer Absetzposition beim Absetzten/Stapeln der angehobenen Kiste;
- Figur 3C: eine schematische Detailansicht des in der Figur 3A gezeigten Greifelements im Eingriff mit der Kiste;
- Figur 4A: eine perspektivische, schematische Ansicht eines Kistenstapelsystems gemäß einer weiteren, beispielhaften Ausführungsform;
- Figur 4B: eine schematische Vorderansicht des in der Figur 4A gezeigten Kistenstapelsystems;
- Figur 4C: eine schematische Detailansicht des in der Figur 4B gezeigten Greifelements im Eingriff mit der Kiste; und
- Figur 5: eine schematische Draufsicht auf ein Kistenstapelsystem gemäß einer weiteren, beispielhaften Ausführungsform.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kupplung. In den Figuren werden identische oder ähnliche Elemente mit identischen Bezugszeichen versehen, soweit dies zweckmäßig ist.

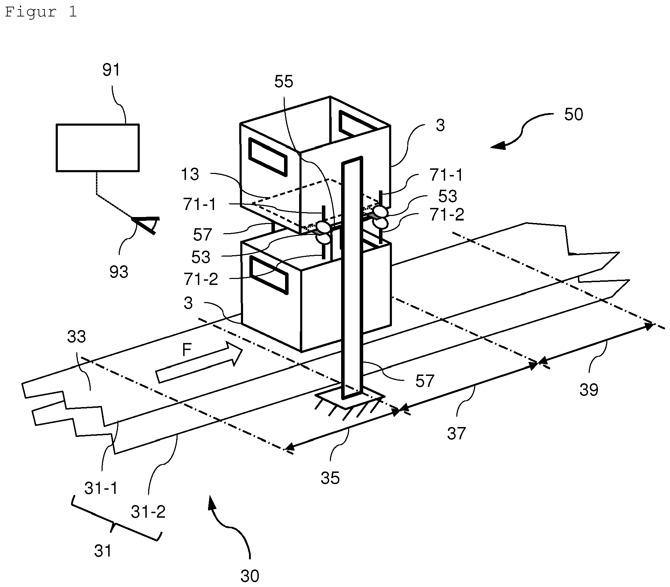

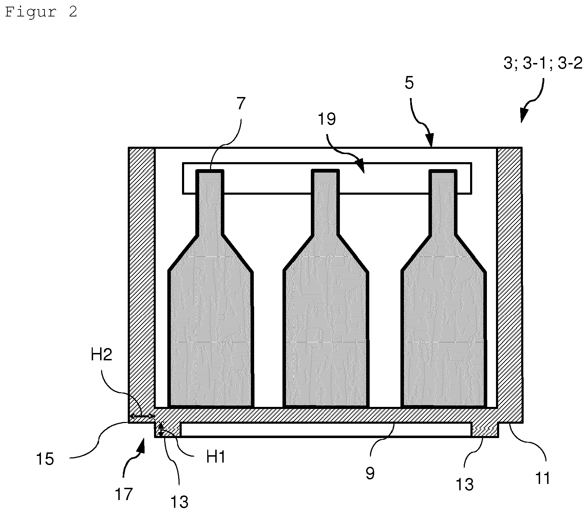

In der Figur 1 ist ein Kistenstapelsystem 1 gemäß einer beispielhaften Ausführungsform gezeigt, und in der Figur 2 ist ein Schnitt (Querschnitt) durch eine Kiste 3 gezeigt, welche durch das Kistenstapelsystem 1 stapelbar ist.

Die in den Figuren 1 und 2 gezeigte Kiste 3 hat einen rechteckigen Grundriss mit einer Längsrichtung (in der Figur 2 senkrecht zur Schnittebene) und einer Breitenrichtung (Links-Rechts-Richtung in der Figur 2) und erstreckt sich senkrecht zu diesem Grundriss in einer Kistenstapelrichtung (Oben-Unten-Richtung in der Figur 2). An einer oberen Seite der Kiste 3 ist eine Einsetzöffnung 5 ausgebildet, durch welche hindurch z.B. Flaschen 7 in die Kiste 3 einsetzbar sind. Weiter dient die Einsetzöffnung, um einen Vorsprung einer anderen Kiste aufzunehmen, wenn die andere Kiste auf die Kiste 3 gestapelt ist. Der Einsetzöffnung 5 liegt ein Boden 9 mit einer Unterseite 11 gegenüber. An der Unterseite 11 ist die Kiste an den zwei gegenüberliegenden Längsseiten mit einem jeweiligen langgestreckten Vorsprung 13 versehen. Der Vorsprung 13 erstreckt sich von der Unterseite 11 aus nach unten sowie in einem seitlichen Abstand zu einem zugehörigen Außenlängsrand 15 des Bodens 9. An den zwei einander gegenüberliegenden Längsseiten der Kiste 3 ist somit eine seitlich nach außen offene Eingriffs-Längsaussparung 17 gebildet, die von der Unterseite 11 des Bodens 9 und dem jeweiligen langgestreckten Vorsprung 13 begrenzt wird. die Eingriffs-Längsaussparung 17 ist in diesem Fall z.B. an allen vier Seiten der Kiste 3 ausgebildet (Längsseiten und Stirnseiten). Die Eingriffs-Längsaussparung 17 hat hier einen rechteckigen Querschnitt mit einer Eingriffshöhe H1 und einer Eingriffstiefe H2. Zudem weist die Kiste 3 eine Tragöffnung 19 auf, mittels welcher die Kiste 3 von Personen getragen werden kann.

Das in der Figur 1 gezeigte Kistenstapelsystem 1 weist eine Kisten-Fördervorrichtung 30 auf, welche mit einer Förderbahn bereitgestellt ist, die als ein Förderband 31 ausgeführt ist. Das Förderband 31 weist einen Obergurt 31-1 (Transportgurt) und einen Untergurt (Rücklaufgurt) 31-2 auf. Weitere Komponenten der Kisten-Fördervorrichtung 30, beispielsweise Tragrollen, ein Antriebsmotor, etc., sind in der Figur 1 nicht dargestellt, aber hinreichend bekannt, sodass eine Beschreibung davon ausgelassen wird. Der Obergurt 31-1 bildet eine Förderfläche 33, auf welcher die Kisten 3 in einer Förderrichtung F des Obergurts 31-1 transportiert werden. Die Förderfläche 33 ist mit einem Kisten-Zuführabschnitt 35, auf welchen die Kisten 3 zuführbar sind, einem Kisten-Stapelabschnitt 37, in welchem die Kisten 3 stapelbar sind, und einem Kisten-Abführabschnitt 39, von welchem aus die gestapelten Kisten 3 abführbar sind, bereitgestellt. In der Figur 1 grenzen die besagten Abschnitte 35, 37, 39 direkt aneinander an; jedoch ist es auch möglich, dass der Kisten-Zuführabschnitt 35 und der Kisten-Abführabschnitt 39 räumlich vom Kisten-Stapelabschnitt 37 getrennt sind, z.B. am Anfang/Ende des Förderbands 31 angeordnet sind. Das Förderband 31 ist eingerichtet, um auf dem Obergurt 31-1 die (z.B. einzelnen) Kisten 3 von dem Kisten-Zuführabschnitt 35 zum Kisten-Stapelabschnitt 37 zu transportieren und um die gestapelten Kisten 3 vom Kisten-Stapelabschnitt 37 aus zum Kisten-Abführabschnitt 39 zu transportieren. Das Zuführen der einzelnen Kisten 3 und das Abführen der (z.B. gestapelten) Kisten 3 in das / aus dem Kistenstapelsystem 1 ist hier nicht weiter beschrieben, kann jedoch z.B. durch weitere Förderbänder erfolgen.

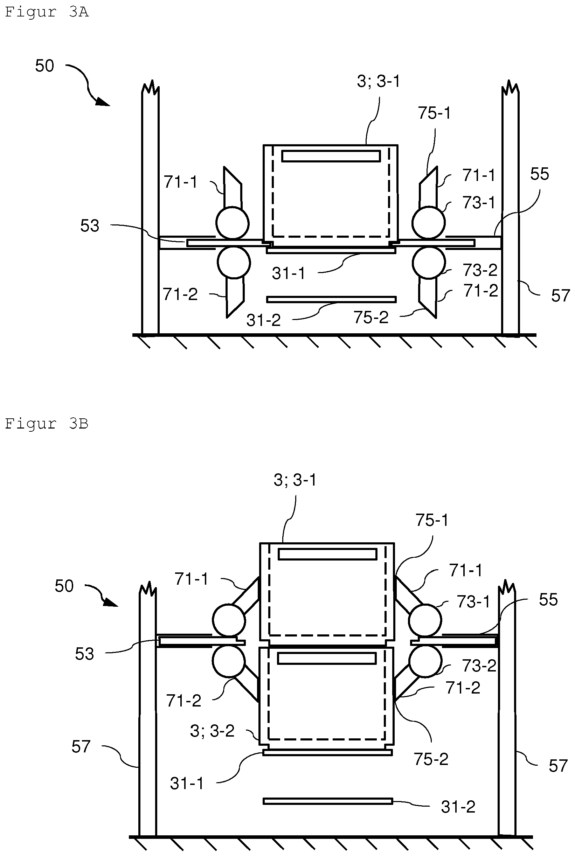

Das Kistenstapelsystem 1 ist weiter mit einer Kisten-Hubvorrichtung 50 bereitgestellt, welche mit Bezug auf die Figuren 1 sowie 3A und 3B erläutert wird.

Die Kisten-Hubvorrichtung 50 ist beidseitig am Kisten-Stapelabschnitt 37 am Förderband 31 angeordnet und weist auf gegenüberliegenden Seiten des Förderbands 31 jeweils zwei Greifelemente 53 auf. Die Greifelemente 53 sind in einer Greifrichtung parallel zur Förderfläche aufeinander zu und voneinander weg bewegbar. Die Greifelemente 53 sind hier z.B. einzeln durch einen Elektromotor (nicht gezeigt) angetrieben, welcher eine Linearbewegung der Greifelemente 53 erzeugt. Zudem sind die Greifelemente 53 in der Kistenstapelrichtung senkrecht zur Förderrichtung F synchron hoch und runter bewegbar. Hierzu sind die Greifelemente 53 (samt nicht gezeigten Elektromotoren) an einer Seite des Förderbands 31 auf einem Träger 55 angeordnet, welcher durch ein Hubsystem 57, beispielsweise ein Riemenhubsystem oder ein Zahnrad-Zahnstangen-Hubsystem in der Kistenstapelrichtung auf und ab bewegbar ist. Ein derartiges Hubsystem ist hinreichend bekannt, sodass eine Beschreibung davon ausgelassen wird.

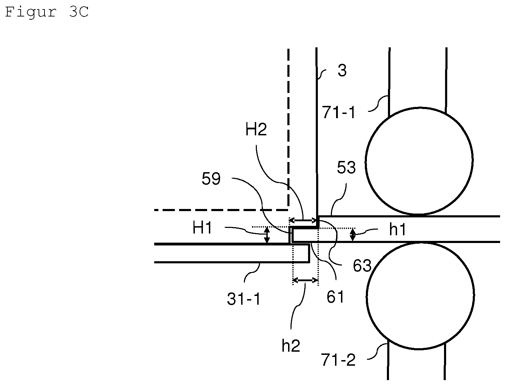

Wie es in der Figur 3C gezeigt ist, weist jedes Greifelement 53 ein freies Ende 59 mit einem seitlich zum Förderband 31 hin vorstehenden Greiffinger 61 auf. Der Greiffinger 61 hat in der Kistenstapelrichtung eine Eingriffsdicke h1, die hier kleiner ist als die Eingriffshöhe H1 der Eingriffs-Längsaussparung 17. Das Greifelement 53 weist weiter eine seitliche Anschlagschulter 63 an seiner Oberseite auf, die in einem Schulterabstand h2 vom freien Ende 59 des zugehörigen Greiffingers 61 ausgebildet ist. Hier ist der Schulterabstand h2 kleiner als eine seitliche Eingriffstiefe H2 der Eingriffs-Längsaussparung 17. Folglich steht beim Eingriff des jeweiligen Greiffingers 61 in die zugehörige Eingriffs-Längsaussparung 17 die Anschlagschulter 63 in Anschlagkontakt mit einer Längsseitenfläche der Kiste 3 und steht der Greiffinger 61 in Kontakt mit der Unterseite 11 des Bodens 9, jedoch nicht mit dem Vorsprung 13. Die Greifelemente 53 sind somit mittels ihres zugehörigen Greiffingers 61 und ihrer zugehörigen Anschlagschulter 63 in der Lage, die Kiste 3 sicher zu ergreifen und mittels des Hubsystems 57 anzuheben (das Ergreifen und Anheben der Kiste ist nachfolgend detaillierter beschrieben).

Wie es in den Figuren 1 sowie 3A und 3B weiter gezeigt ist, ist die Kisten-Hubvorrichtung 50 mit zu den Greifelementen 53 korrespondierenden oberen und unteren Zentrierelementen 71-1 und 71-2 bereitgestellt. Folglich sind an beiden Seiten des Förderbands 31 angrenzend zum Kisten-Stapelabschnitt 37 jeweils vier Zentrierelemente 71-1, 71-2 bereitgestellt. Das obere Zentrierelement 71-1 ist in der Kistenstapelrichtung oberhalb des Greifelements 53 angeordnet, und das untere Zentrierelement 71-2 ist in der Kistenstapelrichtung unterhalb des Greifelements 53 angeordnet. Die Zentrierelemente 71-1, 71-2 sind in einer Zentrierrichtung aufeinander zu und voneinander weg bewegbar. Hierzu sind die Zentrierelemente 71-1, 71-2 mit dem zugehörigen Greifelement 53 mechanisch bewegungsgekuppelt. Das heißt, ein Radabschnitt 73-1, 73-2 eines Zentrierelements 71-1, 71-2 rollt auf einer Ober- bzw. Unterseite des zugehörigen Greifelements 53 ab, sodass bei einer Bewegung des Greifelements 53 die zugehörigen Zentrierelemente 71-1, 71-2 zwischen einer Freigabeposition (siehe Figur 3A) und einer Zentrierposition (siehe Figur 3B) schwenkbar sind. Das obere Zentrierelement 71-1 weist weiter einen oberen Zentrierabschnitt 75-1 auf, und das untere Zentrierelement 71-2 weist weiter einen unteren Zentrierabschnitt 75-2 auf. Die Zentrierabschnitte 75-1, 75-2 sind seitlich zum Förderband 31 hin orientiert und dienen, um in der Zentrierposition die Längsseitenflächen der Kiste(n) 3 zu kontaktieren.

Wie es in der Figur 1 gezeigt ist, weist das Kistenstapelsystem 1 weiter eine Steuervorrichtung 91 auf, welche mit der Kisten-Fördervorrichtung 30 und der Kisten-Hubvorrichtung 50 verbunden ist (die Verbindung ist in der Figur 1 nicht gezeigt). Zudem hat die Steuerungsvorrichtung einen Sensor 93, z.B. ein Kamerasystem oder einen Laserscanner, welcher den Typ und/oder die Position der Kiste 3 im Kisten-Stapelabschnitt 37 erfasst und zur Steuervorrichtung 91 überträgt. Die Steuervorrichtung 91 ist eingerichtet, um auf Basis des vom Sensor 93 erfassten Kistentyps und/oder der Position der Kiste im Kisten-Stapelabschnitt 37 die Kisten-Fördervorrichtung 30 und die Kisten-Hubvorrichtung 50 derart zu steuern, sodass die Kisten 3 gestapelt werden.

Nachfolgend ist ein solcher Stapelvorgang mit Bezug auf die Figuren 1 sowie 3A und 3B beschrieben. Für die Beschreibungen des Stapelvorgangs werden anstatt der Kiste 3 eine erste, eine zweite und eine dritte Kiste 3-1, 3-2 und 3-3 bezeichnet, welche jedoch Klone der Kiste 3 sind.

Die einzelne erste Kiste 3-1 wird von dem Förderband 31 in den Kisten-Stapelabschnitt 37 hinein zugeführt und der Typ und/oder die Position der Kiste werden vom Sensor 93 erfasst. In diesem Zustand befinden sich die Greifelemente 53 außer Eingriff von der ersten Kiste 3-1 und befinden sich die Zentrierelemente 71-1, 71-2 nahe ihrer Zentrierposition. Folglich wird die erste Kiste 3-1 von den Greifelementen 53 und den oberen Zentrierelementen 71-1 nicht kontaktiert. Dann werden die Greifelemente 53 einzeln, unabhängig voneinander von der Steuervorrichtung 91 voneinander weg bewegt. Diese Bewegung bedingt, dass die oberen Zentrierelemente 71-1 mit ihren oberen Zentrierabschnitten 75-1 in die Zentrierposition gelangen, um die Längsseitenflächen der ersten Kiste 3-1 zu kontaktieren. Somit wird die erste Kiste 3-1 im Kisten-Stapelabschnitt 37 zum Anheben ausgerichtet, d.h. die erste Kiste 3-1 ist nach dem Ausrichten zumindest im Wesentlichen parallel zur Förderrichtung F und vor den Greifelementen 53 positioniert. Somit ist die "richtige Griffposition" für die erste Kiste 3-1 eingestellt.

Die Greifelemente 53 werden nun von der Steuervorrichtung 91 mit der Eingriffs-Längsaussparung 17 der ersten Kiste 3-1 in Eingriff gebracht, wobei sich gleichzeitig die oberen Zentrierelemente 71-1, 71-2 in die Freigabeposition bewegen. Die erste Kiste 3-1 ist nun sicher von den Greifelementen 53 ergriffen (siehe Figur 3A) und die oberen Zentrierelemente 71-1 sind von der ersten Kiste 3-1 außer Kontakt. Die unteren Zentrierelemente 71-2 sind am Anheben der ersten Kiste 3-1 unbeteiligt.

Das Hubsystem 57 hebt dann die Greifelemente 53 samt erster Kiste 3-1 synchron in der Kistenstapelrichtung nach oben, sodass unter der Kiste 3-1 im Kisten-Stapelabschnitt 37 ein Freiraum für die zweite Kiste 3-2 geschaffen wird. Die zweite Kiste 3-2 wird durch das Förderband 31 in den Kisten-Stapelabschnitt 37 gefördert und eine Position der zweiten Kiste 3-2 wird vom Sensor 93 erfasst und gegebenenfalls mittels des Förderbands 31 in der Förderrichtung F korrigiert.

Das Hubsystem 57 bewegt anschließend die Greifelemente 53 samt erster Kiste 3-1 synchron abwärts zur zweiten Kiste 3-2 hin, sodass die Greiffinger 61 angrenzend zur Oberseite der zweiten Kiste 3-2 platziert sind. Beispielsweise können die Greiffinger 61 die Oberseite der zweiten Kiste 3-2 (leicht) kontaktieren.

Die Greifelemente 53 werden dann von der Eingriffs-Längsaussparung 17 außer Eingriff gebracht (voneinander wegbewegt), wobei gleichzeitig die oberen und die unteren Zentrierelemente 71-1, 71-2 die Seitenflächen der ersten Kiste 3-1 bzw. der zweiten Kiste 3-2 kontaktieren (siehe Figur 3B). Dieses Kontaktieren dient, um die zweite Kiste 3-2 relativ zur ersten Kiste 3-1 auszurichten (untere Zentrierelemente 71-2), und dient, um die erste Kiste 3-1 beim Außer-Eingriff-Gehen der Greifelemente 53 zu stabilisieren (obere Zentrierelemente 71-2). Folglich wird die erste Kiste 3-1 mit ihrem Vorsprung 13 in die Einsetzöffnung 5 der zweiten Kiste 3-2 eingesetzt und auf die erste Kiste 3-1 abgesetzt.

In diesem Zustand kann entweder der Abtransport der gestapelten Kisten 3-1, 3-2 aus dem Kisten-Stapelabschnitt 37 heraus erfolgen, oder es kann ein erneuter Stapelvorgang begonnen werden, um die Kisten 3-1, 3-2 auf die dritte Kiste 3-3 zu stapeln. In beiden Fällen sind zwei Stellungen der Zentrierelemente 71-1, 71-2 möglich:
- Die Zentrierelemente 71-1, 71-2 befinden sich weiterhin in der Zentrierposition und kontaktieren beim Abtransport der Kisten 3-1, 3-2 aus dem Kisten-Stapelabschnitt 37 heraus bzw. beim Abwärtsbewegen der Greifelemente 53 leicht die Kisten 3-1, 3-2, um diese weiterhin zu zentrieren / seitlich abzustützen. Dies stabilisiert beispielsweise beim Abwärtsbewegen der Greifelemente 53 den Kistenstapel.
- Die Zentrierelemente 71-1, 71-2 werden in eine Position zwischen die Zentrierposition und die Freigabeposition geschwenkt, sodass sie die Kisten 3-1, 3-2 nicht mehr kontaktieren. Somit entsteht ein Bereich zwischen den Zentrierelementen 71-1, 71-2, welcher größer (breiter) ist, als die Breite des Kistenstapels. Dies ermöglicht beispielsweise beim Einführen der dritten Kiste 3-3 in den Kisten-Stapelabschnitt 37 eine größere Toleranz gegenüber einer ungenau positionierten dritten Kiste 3-3. Hierbei können die Greifelemente 53 / Zentrierelemente 71-1, 71-2 vor, nach oder während des Einführens der dritten Kiste 3-3 in den Kisten-Stapelabschnitt 37 abwärtsbewegt werden.

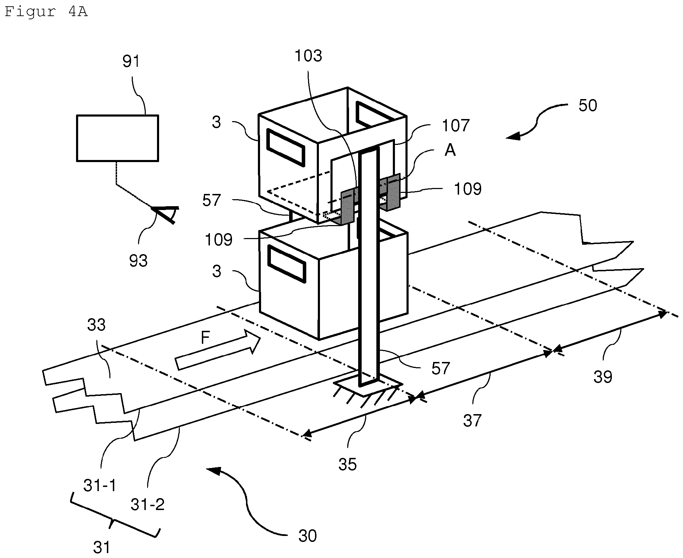

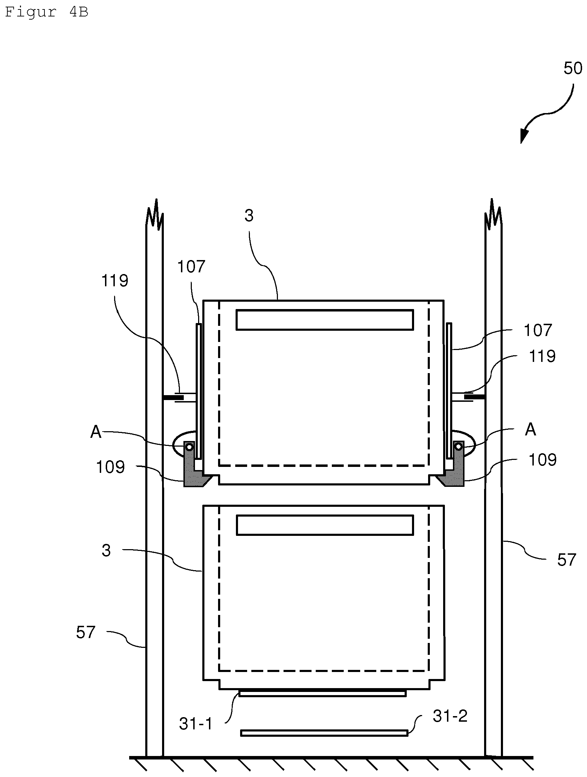

In der Figur 4A ist ein Kistenstapelsystem gemäß einer weiteren beispielhaften Ausführungsform gezeigt, und in der Figur 4B ist eine Detailansicht eines Greifelements des Kistenstapelsystems von Figur 4A gezeigt. Das Kistenstapelsystem dieser Ausführungsform ist bis auf die Greifelemente und die Zentrierelemente gleich zum Kistenstapelsystem der vorhergehenden Ausführungsform, sodass hier ausschließlich die Anordnung und die Funktion der Greif- und Zentrierelemente beschrieben werden. Für die anderen Aspekte des Kistenstapelsystems wird auf die vorhergehende Beschreibung verwiesen.

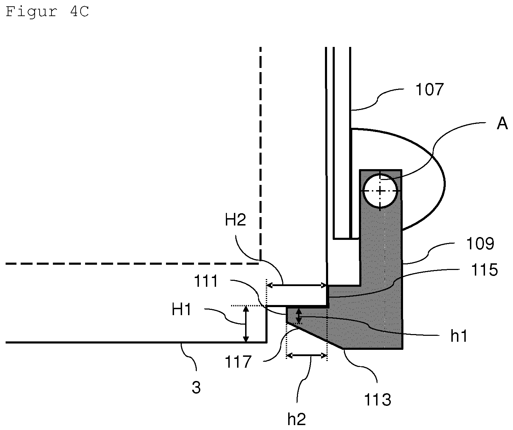

Die Kisten-Hubvorrichtung 50 weist auf gegenüberliegenden Seiten des Förderbands 31 jeweils ein in der Förderrichtung F langgestrecktes Greifelement 103 auf. Das Greifelement 103 ist in einer Greifrichtung um eine Greifelement-Schwenkachse A schwenkbar (siehe Figur 4C), sodass die beiden Greifelemente 103 aufeinander zu und voneinander weg schwenkbar sind. Die Greifelement-Schwenkachse A ist parallel zur Förderrichtung F des Förderbands angeordnet. Beispielsweise spannt eine Feder (nicht gezeigt) die beiden Greifelemente 103 vor, um eine Kraft zu erzeugen, welche die beiden Greifelemente 103 in Richtung zueinander drückt. Ebenfalls ist es möglich, dass die Greifelemente 103 durch einen Elektromotor angetrieben/vorgespannt sind. Über die Greifelement-Schwenkachse A sind die Greifelemente 103 schwenkbar mit einem zugehörigen Trag- und Zentrierelement 107 verbunden. Hier sind das Greifelement 103 und das Trag- und Zentrierelement 107 auf der einen Seite des Förderbands 31 in der Kistenstapelrichtung durch das Hubsystem 57 senkrecht zur Förderrichtung F synchron zum Greifelement 103 und zum Trag- und Zentrierelement 107 auf der anderen Seite des Förderbands 31 hoch und runter bewegbar.

Wie es in den Figuren 4A, 4B und 4C gezeigt ist, ist jedes Greifelement 103 in seinen Förderrichtung-Endbereichen mit einem jeweiligen Greifabschnitt 109 versehen. Der Greifabschnitt 109 ist im Wesentlichen L-förmig gestaltet. Der untere (horizontale) Schenkel des Greifabschnitts 109 weist ein freies Ende 111 mit einem seitlich zum Förderband 31 hin vorstehenden Greiffinger 113 auf. Der obere (vertikale) Schenkel des Greifabschnitts 109 wird von der Greifelement-Schwenkachse A durchtreten. Mittels der Greifelement-Schwenkachse A ist der Greifabschnitt 109 bzw. das Greifelement 103 mit dem Trag- und Zentrierelement 107 verbunden und relativ zu diesem schwenkbar.

Der Greiffinger 113 hat an seinem freien Ende 111 eine Eingriffsdicke h1, die hier kleiner ist als die Eingriffshöhe H1 der Eingriffs-Längsaussparung 17 ist. Der untere (horizontale) Schenkel des Greifabschnitts 109 weist weiter eine seitliche Anschlagschulter 115 an seiner Oberseite auf, die in einem Schulterabstand h2 vom freien Ende 111 des zugehörigen Greiffingers 113 ausgebildet ist. Hier ist der Schulterabstand h2 kleiner als eine seitliche Eingriffstiefe H2 der Eingriffs-Längsaussparung 17. Folglich steht beim Eingriff des jeweiligen Greiffingers 113 mit der zugehörige Eingriffs-Längsaussparung 17 die Anschlagschulter 115 in Anschlagkontakt mit der Längsseitenfläche der Kiste 3 und steht der Greiffinger 113 in Kontakt mit der Unterseite 11 des Bodens 9. Die Greifelemente 103 sind somit mittels ihrer Greifabschnitte 109, d.h., den zugehörigen Greiffingern 113 und den zugehörigen Anschlagschultern 115 in der Lage, die Kiste 3 sicher zu ergreifen und mittels des Hubsystems 57 anzuheben. Weiter ist eine Unterseite des Greiffingers 113 zwischen dessen freien Ende 111 und auswärts über die Anschlagschulter 115 hinaus als Rampe 117 ausgebildet. Das heißt, der Greiffinger 113 hat ausgehend von seinem freien Ende 111 zur Anschlagsschulter 115 hin eine in diesem Fall stetig größer werdende Dicke. Der somit zwischen der Ober- und der Unterseite des Greiffingers 113 ausgebildete Winkel liegt z.B. in etwa zwischen 30° und 60°, z.B. optional 45°. Die Rampe 117 dient, um beim Absetzten der ersten Kiste 3-1 auf die zweite Kiste 3-2 mit einem oberen Umfangsrand der zweiten Kiste 3-2 in Kontakt zu kommen und das Greifelement 103 bei fortschreitender Absetzbewegung nach außen (voneinander weg) zu drücken, sodass das Greifelement 103 von der ersten Kiste 3-1 außer Eingriff geht. Folglich wird ein In-Eingriff-Gehen der Greifelemente 103 mit der Kiste 3 durch eine Federkraft oder andere Aktuatoren (z.B. pneumatische oder elektrische Aktuatoren) realisiert, und wird das Außer-Eingriff-Gehen der Greifelemente 103 von der Kiste 3-1 entgegen der Federkraft durch eine Gleitbewegung der Rampen 117 am oberen Umfangsrand der Kiste 3-1 realisiert.

Wie es in den Figuren 4A und 4B weiter gezeigt ist, ist das Greifelement 103 mit dem Trag- und Zentrierelement 107 schwenkbar verbunden. Das Trag- und Zentrierelement 107 ist hier in Form einer Platte ausgebildet und ist an beiden Seiten des Förderbands 31 angrenzend zum Kisten-Stapelabschnitt 37 bereitgestellt. Das Trag- und Zentrierelement 107 kontaktiert die Seitenflächen der Kiste 3, sodass die (anzuhebende/angehobene) Kiste 3 dadurch zentriert wird. Hierzu ist das Trag- und Zentrierelement 107 mit der Kisten-Hubvorrichtung 50 mittels einer Einstellvorrichtung 119 bewegbar verbunden. Die Einstelleinrichtung ist z.B. durch einen Elektromotor oder einen Pneumatik-Aktuator (beide nicht gezeigt) bewegbar. Die Einstelleinrichtung 119 dient, um das Trag- und Zentrierelement 107 z.B. zumindest im Wesentlichen parallel zur Förderfläche 33 zu bewegen. Alternativ kann die Einstellvorrichtung 119 auch eine Schwenkvorrichtung sein, welche das Trag- und Zentrierelement 107 zur Kiste 3 hin und von dieser weg schwenken kann, z.B. um eine zur Förderrichtung F parallel Schwenkachse. Somit sind die beiderseits des Förderbands 31 vorgesehenen Trag- und Zentrierelemente 107 aufeinander zu und voneinander weg bewegbar. Allerdings können die Trag- und Zentrierelemente 107 z.B. auch als Leitelemente ausgeführt sein, welche nicht aufeinander zu und voneinander weg bewegbar sind.

Jedoch ist es auch möglich, dass eine Kombination der für diese Ausführungsform beschriebenen Greif- und Zentrierelemente zusammen mit den oder anstatt der in der vorhergehend beschrieben Ausführungsform verwendeten Greif- und Zentrierelemente verwendet wird.

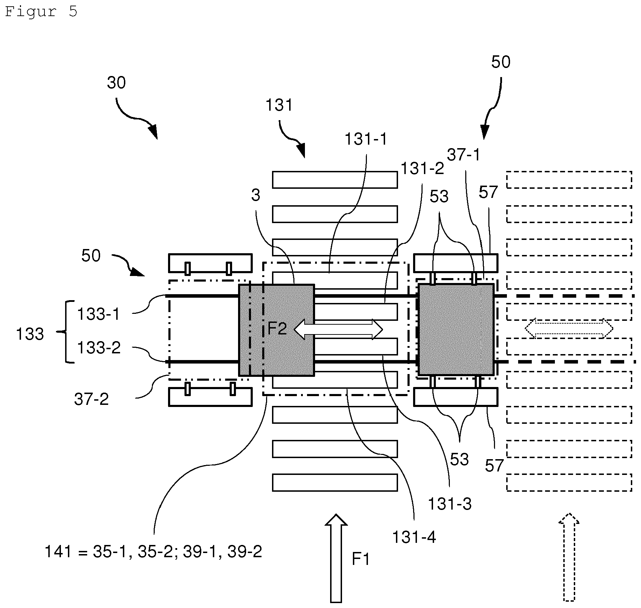

In der Figur 5 ist ein Kistenstapelsystem einer beispielhaften Ausführungsform in einer Draufsicht gezeigt. Das hier gezeigte Kistenstapelsystem verwendet mehrere Kisten-Stapelabschnitte und verdeutlicht eine Anordnung davon. Die vorhergehend beschriebenen Komponenten "Kisten-Hubvorrichtung" und "Steuervorrichtung" werden hier verwendet und sind im Weiteren nicht mehr explizit beschrieben.

Hier ist die Förderbahn der Kisten-Fördervorrichtung 30 als ein Rollenförderer 131 und als ein Bandförderer bzw. Kettenförderer 133 ausgebildet. Die einzelnen Rollen des Rollenförderers 131 bilden an deren Oberseiten eine Rollenförderer-Förderfläche, auf welcher die Kisten 3 in einer Förderrichtung F1 transportiert werden. Die Förderrichtung F1 ist hier nur beispielhaft; eine andere Förderrichtung oder wechselnde Förderrichtungen sind ebenfalls möglich. Da ein derartiger Rollenförderer hinreichend bekannt ist, wird eine weitere Beschreibung davon weggelassen. Der Bandförderer 133 weist zwei parallel zueinander verlaufende Förderbänder bzw. Kettenbänder 133-1, 133-2 auf, die sich rechtwinklig zum Rollenförderer 131 erstrecken und durch einen jeweiligen Zwischenraum zwischen zwei benachbarten Rollen 131-1 und 131-2 bzw. 131-3 und 131-4 des Rollenförderers 131 hindurchtreten. Das heißt, der Bandförderer 133 kreuzt den Rollenförderer 131 mit einem rechten Winkel und fördert Kisten 3 in einer Förderrichtung F2. Die Oberseiten der Förderbänder 133-1, 133-2 bilden die Förderfläche 33 (hier auch als eine Bandförderer-Förderfläche bezeichnet), welche unterhalb der Rollenförderer-Förderfläche angeordnet ist. Beispielsweise können die beiden Förderflächen auch zumindest im Wesentlichen in derselben Ebene angeordnet sein. Die Bandförderer-Förderfläche 33 ist von der Steuervorrichtung 91 selektiv über die Rollenförderer-Förderfläche anhebbar (z.B. in der Art eines Kettenhubumsetzers). Beispielsweise kann der Sensor 93 die auf dem Rollenförderer 131 transportierten Kisten 3 erfassen, sodass die Steuervorrichtung 91 selektiv die Bandförderer-Förderfläche 33 über die Rollenförderer-Förderfläche anheben kann, um die Kiste 3 vom Rollenförderer 131 zu entnehmen, wenn sie sich über dem Bandförderer 133 befinden. Somit können Kisten 3 selektiv durch den Bandförderer 133 vom Rollenförderer 131 abgehoben werden und in die Förderrichtung F2 zu einem Kisten-Stapelabschnitt gefördert werden.

Die Förderbahn weist weiter einen Förderbahn-Hauptabschnitt 141 (punkt-strichlierter Abschnitt) und mehrere, in diesem Fall zwei, Kisten-Stapelabschnitte 37-1, 37-2 (doppelpunktstrichlierte Abschnitte) auf, die seitlich benachbart zu dem Förderbahn-Hauptabschnitt 141 angeordnet sind. Zu den jeweiligen Kisten-Stapelabschnitten 37-1, 37-2 zugehörige Kisten-Zuführabschnitte/Kisten-Abführabschnitte 35-1, 39-1 sowie 35-2, 39-2 der Bandförderer-Förderfläche 33 überlappen mit dem Förderbahn-Hauptabschnitt 141. Das heißt, der Förderbahn-Hauptabschnitt 141 ist zugleich der Kisten-Zuführabschnitt sowie der Kisten-Abführabschnitt. Die Kisten-Stapelabschnitte 37-1, 37-2 erhalten somit mittels des Bandförderers 133 vom Rollenförderer 131 Einzelkisten. Gestapelte Kisten werden in umgekehrter Weise vom Kisten-Stapelabschnitt 37-1, 37-2 auf den Rollenförderer abgeführt.

An dem jeweiligen Kisten-Stapelabschnitt 37-1, 37-2 ist eine zugehörige Kisten-Hubvorrichtung 50 angeordnet. Hier sind die zwei Kisten-Stapelabschnitte 37-1, 37-2 auf einander gegenüberliegenden Seiten des Förderbahn-Hauptabschnitts 141 angeordnet. Eine derartige Anordnung kann z.B. eine Grundfläche einnehmen, welche z.B. zumindest im Wesentlichen einem Maß einer Europalette entspricht (1200 x 800 mm). Darüber hinaus kann die Grundfläche auch z.B. zumindest im Wesentlichen 1400 x 800 mm sein. Jedoch können die Kisten-Stapelabschnitte 37-1, 37-2 auch zueinander versetzt am Förderbahn-Hauptabschnitt 141 angeordnet sein oder es können mehr als zwei Kisten-Stapelabschnitte vorgesehen sein. Auch ist es z.B. möglich einen weiteren Rollenförderer neben dem Kisten-Stapelabschnitt 37-1 und/oder 37-2 vorzusehen (gegenüberliegend zu der Seite, an welcher der Rollenförderer 131 vorgesehen ist; vgl. hierzu beispielhaft die strichlierte Darstellung in der Figur 5). Folglich sind die Kisten 3 und/oder Kistenstapel ausgehend von sowohl dem einen als auch dem anderen Rollenförderer in den jeweiligen Kisten-Stapelabschnitt 37-1, 37-2 zuführbar (und entnehmbar).

Diese Anordnung der Kisten-Fördervorrichtung 30 und der Kisten-Stapelabschnitte 37-1, 37-2 erlaubt es, unterschiedliche Kistentypen vom Rollenförderer 131 zu entnehmen und mittels jeweils korrespondierenden Kistenstapelvorrichtungen zu stapeln. Die gestapelten Kisten 3 können dann wieder dem Rollenförderer 131 (oder dem anderen Rollenförderer) zugeführt und abtransportiert werden.

## Patentansprüche

1. Kistenstapelsystem (1) mit
• einer Mehrzahl von in einer Kistenstapelrichtung aufeinander zu stapelnden Kisten (3), wobei die jeweilige Kiste (3) eine obere Einsetzöffnung (5) zum Einsetzen von Artikeln (7) in die Kiste (3) aufweist, und wobei die jeweilige Kiste (3) einen der oberen Einsetzöffnung (5) gegenüberliegenden Boden (9) mit einer Unterseite (11) aufweist, an welcher Unterseite (11) der Boden (9) an zumindest zwei gegenüberliegenden Seiten mit einem jeweiligen langgestreckten Vorsprung (13) versehen ist, der sich von der Unterseite (11) aus nach unten sowie in einem seitlichen Abstand zu einem jeweils zugehörigen Außenlängsrand (15) des Bodens (9) erstreckt, sodass an den zumindest zwei gegenüberliegenden Seiten eine seitlich nach außen offene Eingriffs-Längsaussparung (17) vorliegt, die von der Unterseite (11) des Bodens (9) und dem jeweiligen langgestreckten Vorsprung (13) begrenzt wird und die eine sich in die Kistenstapelrichtung erstreckende Eingriffshöhe (H1) hat, und
• einer Kistenstapelvorrichtung zum automatischen Stapeln der Kisten (3), wobei die Kistenstapelvorrichtung aufweist:
∘ eine Kisten-Fördervorrichtung (30) mit einer Förderbahn (31; 131, 133), welche eine Förderfläche (33) definiert und auf welcher die Kisten (3) transportierbar sind und welche aufweist:
▪ einen Kisten-Zuführabschnitt (35; 35-1, 35-2), auf welchen die Kisten (3) zuführbar sind,
▪ einen Kisten-Stapelabschnitt (37; 37-1, 37-2), in welchem die Kisten (3) stapelbar sind, und
▪ einen Kisten-Abführabschnitt (39; 39-1, 39-2), von welchem die gestapelten Kisten (3) abführbar sind, wobei
die Kisten-Fördervorrichtung (30) eingerichtet ist, um die Kisten (3) von dem Kisten-Zuführabschnitt (35; 35-1, 35-2) zum Kisten-Stapelabschnitt (37; 37-1, 37-2) zu fördern und um die gestapelten Kisten (3) vom Kisten-Stapelabschnitt (37; 37-1, 37-2) zum Kisten-Abführabschnitt (39; 39-1, 39-2) zu fördern,
∘ eine Kisten-Hubvorrichtung (50), welche am Kisten-Stapelabschnitt (37; 37-1; 37-2) angeordnet ist und welche auf gegenüberliegenden Seiten der Förderbahn (31; 133) Greifelemente (53; 103) aufweist, die in einer Greifrichtung zumindest im Wesentlichen parallel zur Förderfläche (33) aufeinander zu und voneinander weg bewegbar sind und die in der Kistenstapelrichtung zumindest im Wesentlichen senkrecht zur Förderrichtung (F; F2) synchron hoch und runter bewegbar sind, wobei jedes Greifelement (53; 103) ein freies Ende (59; 111) mit einem seitlich zur Förderbahn (33; 133) hin vorstehenden Greiffinger (61; 113) aufweist, der in der Kistenstapelrichtung eine Eingriffsdicke (h1) hat, die zumindest im Wesentlichen gleich der oder kleiner ist als die Eingriffshöhe (H1) der Eingriffs-Längsaussparung (17), sodass eine jeweilige Kiste (3) an einander gegenüberliegenden Seiten dadurch ergreifbar ist, dass die Greiffinger (61; 113) an den einander gegenüberliegenden Seiten in die zugehörigen Eingriffs-Längsaussparung (17) eingreifen, und
∘ eine Steuervorrichtung (91), welche mit der Kisten-Fördervorrichtung (30) und der Kisten-Hubvorrichtung (50) verbunden ist und welche eingerichtet ist, um die Kisten-Fördervorrichtung (30) und die Kisten-Hubvorrichtung (50) in einer Weise aufeinander abgestimmt zu steuern, dass in wiederholter Weise ein Vorgang durchführbar ist, gemäß welchem eine Kiste (3; 3-1), die sich im Kisten-Stapelabschnitt (37; 37-1, 37-2) auf der Förderfläche (33) befindet, von den Greifelementen (53; 103) ergreifbar und anhebbar ist, jeweils eine neue Kiste (3; 3-2) in den Kisten-Stapelabschnitt (37; 37-1, 37-2) unter die angehobene Kiste (3; 3-1) förderbar ist, die angehobene Kiste (3; 3-1) auf die neue Kiste (3; 3-2) absetzbar ist und die jeweils neue Kiste (3; 3-2) wiederum von den Greifelementen (53; 103) ergreifbar und zusammen mit der oder den darauf abgesetzten vorherigen Kisten (3; 3-1) anhebbar ist, um darunter eine wiederum neue Kiste (3; 3-3) anordnen zu können, **dadurch gekennzeichnet, dass**
das jeweilige Greifelement (53; 103) eine seitliche Anschlagschulter (63; 115) aufweist, die in einem Schulterabstand (h2) von einem freien Ende (59; 111) des zugehörigen Greiffingers (61; 113) ausgebildet ist,
wobei der Schulterabstand (h2) kleiner ist als eine seitliche Eingriffstiefe (H2) der Eingriffs-Längsaussparung (17), sodass beim Eingriff des jeweiligen Greiffingers (61; 113) in die zugehörige Eingriffs-Längsaussparung (17) die Anschlagschulter (63; 115) in Anschlagkontakt mit einer Seitenfläche der Kiste (3) steht.

2. Kistenstapelsystem (1) gemäß Anspruch 1, wobei auf jeder Seite der Förderbahn (31; 133) ein einzelnes Greifelement (53; 103) mit einem einzelnen Greiffinger (61; 113) bereitgestellt ist, welcher in Richtung der Förderbahn (31; 133) langgestreckt ausgebildet ist.

3. Kistenstapelsystem (1) gemäß irgendeinem der vorhergehenden Ansprüche, wobei die Bewegung der Greifelemente (53; 103) aufeinander zu und voneinander weg eine Schwenkbewegung um eine Achse (A) ist, welche entweder zumindest im Wesentlichen senkrecht oder parallel zur Förderfläche (33) ist.

4. Kistenstapelsystem (1) gemäß Anspruch 3, wobei die Bewegung der Greifelemente (53; 103) aufeinander zu und voneinander weg von der Steuervorrichtung (91) unabhängig steuerbar ist.

5. Kistenstapelsystem (1) gemäß irgendeinem der vorhergehenden Ansprüche, wobei die Kisten-Hubvorrichtung (50) an den gegenüberliegenden Seiten der Förderbahn (31; 133) Zentrierelemente (71-1, 71-2; 107) aufweist, die in einer Zentrierrichtung zumindest im Wesentlichen parallel zur Förderfläche (33) aufeinander zu und voneinander weg bewegbar sind, wobei jedes Zentrierelement (71-1, 71-2; 107) einen oberen und einen unteren Zentrierabschnitt (75-1, 75-2) aufweist, die jeweils seitlich zur Förderbahn (31; 133) hin orientiert sind, um zum Zentrieren der vorigen Kiste/Kisten (3; 3-1) zu einer neuen Kiste (3; 3-2) eine jeweils zugehörige Seitenfläche der vorigen Kiste/Kisten (3; 3-1) und eine jeweils zugehörige Seitenfläche der neuen Kiste (3; 3-2) seitlich kontaktieren zu können.

6. Kistenstapelsystem (1) gemäß Anspruch 5, wobei die Zentrierelemente (71-1, 71-2; 107) mit den Greifelementen (53; 103) mechanisch bewegungsgekuppelt sind, um die Bewegung der Zentrierelemente (71-1, 71-2; 107) mit der Bewegung der Greifelemente (53; 103) mechanisch zu synchronisieren.

7. Kistenstapelsystem (1) gemäß irgendeinem der vorhergehenden Ansprüche, wobei der Kisten-Zuführabschnitt (35; 35-1, 35-2) auch der Kisten-Abführabschnitt (39; 39-1, 39-2) ist.

8. Kistenstapelsystem (1) gemäß irgendeinem der vorhergehenden Ansprüche, wobei die Förderbahn (31; 133) einen Förderbahn-Hauptabschnitt (141) und mehrere Kisten-Stapelabschnitte (37-1, 37-2) aufweist, die seitlich benachbart zu dem Förderbahn-Hauptabschnitt (141) angeordnet sind, und wobei die Kistenstapelvorrichtung mehrere Kisten-Hubvorrichtungen (50) aufweist, die den Kisten-Stapelabschnitten (37-1, 37-2) jeweilig zugeordnet sind.

9. Kistenstapelsystem (1) gemäß Anspruch 8, wobei zumindest zwei Kisten-Stapelabschnitte (37-1, 37-2) auf einander gegenüberliegenden Seiten des Förderbahn-Hauptabschnitts (141) angeordnet sind.

## Claims

1. Crate-stacking system (1) having
• a multiplicity of crates (3) for stacking one on top of the other in a crate-stacking direction, wherein the respective crate (3) has an upper insertion opening (5) for the insertion of articles (7) into the crate (3), and wherein the respective crate (3) has a base (9) which is situated opposite the upper insertion opening (5) and which has an underside (11), at which underside (11) the base (9) is equipped, at at least two opposite sides, with a respective elongate projection (13) which extends downward from the underside (11) and with a lateral spacing to a respectively associated outer longitudinal edge (15) of the base (9), such that, at the at least two opposite sides, a laterally outwardly open engagement longitudinal recess (17) is provided which is delimited by the underside (11) of the base (9) and by the respective elongate projection (13) and which has an engagement height (H1) extending in the crate-stacking direction, and
• a crate-stacking apparatus for the automatic stacking of the crates (3), wherein the crate-stacking apparatus has:
∘ a crate conveying apparatus (30) with a conveying path (31; 131, 133) which defines a conveying surface (33) and on which the crates (3) can be transported and which has:
▪ a crate feed section (35; 35-1, 35-2) onto which the crates (3) can be fed,
▪ a crate stacking section (37; 37-1, 37-2) in which the crates (3) can be stacked, and
▪ a crate discharge section (39; 39-1, 39-2) from which the stacked crates (3) can be discharged, wherein
the crate conveying apparatus (30) is designed to convey the crates (3) from the crate feed section (35; 35-1, 35-2) to the crate stacking section (37; 37-1, 37-2) and to convey the stacked crates (3) from the crate stacking section (37; 37-1, 37-2) to the crate discharge section (39; 39-1, 39-2),
∘ a crate lifting apparatus (50) which is arranged at the crate stacking section (37; 37-1; 37-2) and which, on opposite sides of the conveying path (31; 133), has gripping elements (53; 103) which are movable toward one another and away from one another in a gripping direction at least substantially parallel to the conveying surface (33) and which are movable upward and downward synchronously in the crate-stacking direction at least substantially perpendicular to the conveying direction (F; F2), wherein each gripping element (53; 103) has a free end (59; 111) with a gripping finger (61; 113) which projects laterally toward the conveying path (33; 133) and which, in the crate-stacking direction, has an engagement thickness (h1) which is at least substantially equal to or smaller than the engagement height (H1) of the engagement longitudinal recess (17), such that a respective crate (3) can be gripped at mutually opposite sides by virtue of the gripping fingers (61; 113) engaging, at the mutually opposite sides, into the associated engagement longitudinal recess (17), and
∘ a control apparatus (91) which is connected to the crate conveying apparatus (30) and to the crate lifting apparatus (50) and which is designed to control the crate conveying apparatus (30) and the crate lifting apparatus (50) in a manner coordinated with one another such that a process can be repeatedly performed in which a crate (3; 3-1) situated in the crate stacking section (37; 37-1, 37-2) on the conveying surface (33) can be gripped and lifted by the gripping elements (53; 103), in each case one new crate (3; 3-2) can be conveyed into the crate stacking section (37; 37-1, 37-2) below the lifted crate (3; 3-1), the lifted crate (3; 3-1) can be set down onto the new crate (3; 3-2), and the in each case new crate (3; 3-2) can in turn be gripped by the gripping elements (53; 103) and lifted together with the one or more previous crates (3; 3-1) set down thereon in order that, in turn, a new crate (3; 3-3) can be arranged therebelow, **characterized in that** the respective gripping element (53; 103) has a lateral abutment shoulder (63; 115) which is formed with a shoulder spacing (h2) to a free end (59; 111) of the associated gripping finger (61; 113), wherein the shoulder spacing (h2) is smaller than a lateral engagement depth (H2) of the engagement longitudinal recess (17), such that, when the respective gripping finger (61; 113) engages into the associated engagement longitudinal recess (17), the abutment shoulder (63; 115) is in abutting contact with a side surface of the crate (3).

2. Crate-stacking system (1) according to Claim 1, wherein, on each side of the conveying path (31; 133), there is provided a single gripping element (53; 103) with a single gripping finger (61; 113) which is of elongate form in the direction of the conveying path (31; 133).

3. Crate-stacking system (1) according to any one of the preceding claims, wherein the movement of the gripping elements (53; 103) toward one another and away from one another is a pivoting movement about a spindle (A) which is either at least substantially perpendicular or parallel to the conveying surface (33).

4. Crate-stacking system (1) according to Claim 3, wherein the movement of the gripping elements (53; 103) toward one another and away from one another is controllable independently by the control apparatus (91).

5. Crate-stacking system (1) according to any one of the preceding claims, wherein the crate lifting apparatus (50) has, at the opposite sides of the conveying path (31; 133), centering elements (71-1, 71-2; 107) which are movable toward one another and away from one another in a centering direction at least substantially parallel to the conveying surface (33), wherein each centering element (71-1, 71-2; 107) has an upper and a lower centering section (75-1, 75-2), which centering sections are oriented in each case laterally with respect to the conveying path (31; 133) in order, for the centering of the previous crate/crates (3; 3-1) with respect to a new crate (3; 3-2), to be able to laterally make contact with a respectively associated side surface of the previous crate/crates (3; 3-1) and with a respectively associated side surface of the new crate (3; 3-2).

6. Crate-stacking system (1) according to Claim 5, wherein the centering elements (71-1, 71-2; 107) are mechanically coupled in terms of motion to the gripping elements (53; 103) in order to mechanically synchronize the movement of the centering elements (71-1, 71-2; 107) with the movement of the gripping elements (53; 103).

7. Crate-stacking system (1) according to any one of the preceding claims, wherein the crate feed section (35; 35-1, 35-2) is also the crate discharge section (39; 39-1, 39-2).

8. Crate-stacking system (1) according to any one of the preceding claims, wherein the conveying path (31; 133) has a conveying path main section (141) and multiple crate stacking sections (37-1, 37-2) which are arranged laterally adjacent to the conveying path main section (141), and wherein the crate-stacking apparatus has multiple crate lifting apparatuses (50) which are respectively assigned to the crate stacking sections (37-1, 37-2) .

9. Crate-stacking system (1) according to Claim 8, wherein at least two crate stacking sections (37-1, 37-2) are arranged on mutually opposite sides of the conveying path main section (141).

## Revendications

1. Système d'empilement de caisses (1), comprenant
- une pluralité de caisses (3) devant être empilées les unes au-dessus des autres dans une direction d'empilement des caisses, chaque caisse (3) présentant une ouverture d'insertion supérieure (5) pour insérer des articles (7) dans la caisse (3), et chaque caisse (3) présentant un fond (9) opposé à l'ouverture d'insertion supérieure (5), avec un côté inférieur (11), au niveau du côté inférieur duquel (11) le fond (9) est pourvu, au niveau d'au moins deux côtés opposés, d'une saillie (13) allongée respective qui s'étend depuis le côté inférieur (11) vers le bas ainsi qu'à une distance latérale par rapport à un bord longitudinal extérieur (15) respectivement associé du fond (9), de telle sorte qu'au niveau des au moins deux côtés opposés, il existe un évidement longitudinal d'engagement (17) ouvert latéralement vers l'extérieur, qui est limité par le côté inférieur (11) du fond (9) et la saillie allongée respective (13) et qui présente une hauteur d'engagement (H1) s'étendant dans la direction d'empilement des caisses, et
- un dispositif d'empilement de caisses pour empiler automatiquement les caisses (3), le dispositif d'empilement de caisses présentant :
- un dispositif de transport de caisses (30) avec une bande transporteuse (31 ; 131, 133) qui définit une surface de transport (33) et sur laquelle les caisses (3) peuvent être transportées et qui présente :
- une partie d'acheminement de caisses (35 ; 35-1, 35-2), sur laquelle les caisses (3) peuvent être acheminées,
- une partie d'empilement de caisses (37 ; 37-1, 37-2), dans laquelle les caisses (3) peuvent être empilées, et
- une partie d'évacuation de caisses (39 ; 39-1, 39-2), depuis laquelle les caisses empilées (3) peuvent être évacuées,
le dispositif de transport de caisses (30) étant prévu pour transporter les caisses (3) depuis la partie d'acheminement de caisses (35 ; 35-1, 35-2) jusqu'à la partie d'empilement de caisses (37 ; 37-1, 37-2) et pour transporter les caisses empilées (3) depuis la partie d'empilement de caisses (37 ; 37-1, 37-2) jusqu'à la partie d'évacuation de caisses (39 ; 39-1, 39-2),
- un dispositif de levage de caisses (50) qui est disposé au niveau de la partie d'empilement de caisses (37 ; 37-1 ; 37-2) et qui présente sur des côtés opposés de la bande transporteuse (31 ; 133), des éléments de préhension (53 ; 103) qui peuvent être déplacés l'un vers l'autre et à l'écart l'un de l'autre dans une direction de préhension au moins essentiellement parallèlement à la surface de transport (33), et qui peuvent être déplacés de manière synchronisée vers le haut et vers le bas dans la direction d'empilement des caisses au moins essentiellement perpendiculairement à la direction de transport (F ; F2), chaque élément de préhension (53 ; 103) présentant une extrémité libre (59 ; 111) avec un doigt de préhension (61 ; 113) faisant saillie latéralement vers la bande transporteuse (33 ; 133), lequel présente, dans la direction d'empilement des caisses, une épaisseur d'engagement (h1) qui est au moins essentiellement égale ou inférieure à la hauteur d'engagement (H1) de l'évidement longitudinal d'engagement (17), de telle sorte qu'une caisse respective (3) puisse être saisie au niveau de côtés mutuellement opposés de telle sorte que les doigts de préhension (61 ; 113) s'engagent au niveau des côtés mutuellement opposés dans l'évidement longitudinal d'engagement associé (17), et
- un dispositif de commande (91) qui est connecté au dispositif de transport de caisses (30) et au dispositif de levage de caisses (50) et qui est prévu pour commander le dispositif de transport de caisses (30) et le dispositif de levage de caisses (50) de manière adaptée l'un à l'autre de telle sorte qu'une opération puisse être effectuée de manière répétée, conformément à laquelle une caisse (3 ; 3-1), qui se trouve dans la partie d'empilement de caisses (37 ; 37-1, 37-2) sur la surface de transport (33), peut être saisie et soulevée par les éléments de préhension (53 ; 103), une nouvelle caisse (3 ; 3-2) peut respectivement être transportée dans la partie d'empilement de caisses (37 ; 37-1, 37-2) sous la caisse soulevée (3 ; 3-1), la caisse soulevée (3 ; 3-1) peut être déposée sur la nouvelle caisse (3 ; 3-2) et la nouvelle caisse respective (3 ; 3-2) peut être à nouveau saisie par les éléments de préhension (53 ; 103) et peut être soulevée conjointement avec la ou les caisses précédentes (3 ; 3-1) déposées sur celle-ci, afin de pouvoir disposer en dessous à nouveau une nouvelle caisse (3 ; 3-3),
**caractérisé en ce que**
l'élément de préhension respectif (53 ; 103) présente un épaulement de butée latéral (63 ; 115) qui est réalisé à une distance d'épaulement (h2) d'une extrémité libre (59 ; 111) du doigt de préhension associé (61 ; 113), la distance d'épaulement (h2) étant inférieure à une profondeur d'engagement latérale (H2) de l'évidement longitudinal d'engagement (17), de sorte que lors de l'engagement du doigt de préhension respectif (61 ; 113) dans l'évidement longitudinal d'engagement associé (17), l'épaulement de butée (63 ; 115) soit en contact de butée avec une surface latérale de la caisse (3) .

2. Système d'empilement de caisses (1) selon la revendication 1, dans lequel, de chaque côté de la bande transporteuse (31 ; 133) est prévu un élément de préhension unique (53 ; 103) avec un doigt de préhension unique (61 ; 113) qui est réalisé de manière allongée dans la direction de la bande transporteuse (31 ; 133).

3. Système d'empilement de caisses (1) selon l'une quelconque des revendications précédentes, dans lequel le déplacement des éléments de préhension (53 ; 103) l'un vers l'autre et à l'écart l'un de l'autre est un mouvement de pivotement autour d'un axe (A) qui est au moins essentiellement soit perpendiculaire soit parallèle à la surface de transport (33).

4. Système d'empilement de caisses (1) selon la revendication 3, dans lequel le déplacement des éléments de préhension (53 ; 103) l'un vers l'autre et à l'écart l'un de l'autre peut être commandé indépendamment par le dispositif de commande (91).

5. Système d'empilement de caisses (1) selon l'une quelconque des revendications précédentes, dans lequel le dispositif de levage de caisses (50) présente, au niveau des côtés opposés de la bande transporteuse (31 ; 133), des éléments de centrage (71-1, 71-2 ; 107) qui peuvent être déplacés l'un vers l'autre et à l'écart l'un de l'autre dans une direction de centrage au moins essentiellement parallèlement à la surface de transport (33), chaque élément de centrage (71-1, 71-2 ; 107) présentant une partie de centrage supérieure et une partie de centrage inférieure (75-1, 75-2) qui sont chacune orientées latéralement vers la bande transporteuse (31 ; 133), afin de pouvoir mettre en contact latéral, pour le centrage de la ou des caisses précédentes (3 ; 3-1) par rapport à une nouvelle caisse (3 ; 3-2), une surface latérale respectivement associée de la ou des caisses précédentes (3 ; 3-1) et une surface latérale respectivement associée de la nouvelle caisse (3 ; 3-2) .

6. Système d'empilement de caisses (1) selon la revendication 5, dans lequel les éléments de centrage (71-1, 71-2 ; 107) sont accouplés de manière déplaçable mécaniquement avec les éléments de préhension (53 ; 103) afin de synchroniser mécaniquement le déplacement des éléments de centrage (71-1, 71-2 ; 107) avec le déplacement des éléments de préhension (53 ; 103).

7. Système d'empilement de caisses (1) selon l'une quelconque des revendications précédentes, dans lequel la partie d'acheminement de caisses (35 ; 35-1, 35-2) est également la partie d'évacuation de caisses (39 ; 39-1, 39-2).

8. Système d'empilement de caisses (1) selon l'une quelconque des revendications précédentes, dans lequel la bande transporteuse (31 ; 133) présente une partie principale de bande transporteuse (141) et plusieurs parties d'empilement de caisses (37-1, 37-2) qui sont disposées latéralement à côté de la partie principale de bande transporteuse (141), et le dispositif d'empilement de caisses présente plusieurs dispositifs de levage de caisses (50) qui sont associés à chaque fois aux parties d'empilement de caisses (37-1, 37-2).

9. Système d'empilement de caisses (1) selon la revendication 8, dans lequel au moins deux parties d'empilement de caisses (37-1, 37-2) sont disposées sur des côtés mutuellement opposés de la partie principale de bande transporteuse (141).
